# EUROPÄISCHE PATENTSCHRIFT

(11) **EP 2 437 274 B1**
(45) Veröffentlichungstag und Bekanntmachung des Hinweises auf die Patenterteilung: **30.10.2013**
(21) Anmeldenummer: 11183091.5
(22) Anmeldetag: 28.09.2011
(51) Int. Cl.: H01G 2/10, H01G 9/00, H01M 2/00, H01G 11/10, H01G 11/14, H01G 11/78, H01M 2/10

(54) **Vorrichtung zur Energiespeicherung für ein elektrisches Triebfahrzeug**
Device for energy storage for an electric locomotive
Dispositif de stockage d'énergie pour une automotrice électrique

(30) Priorität: 29.09.2010 DE 102010041601
(43) Veröffentlichungstag der Anmeldung: 04.04.2012
(73) Patentinhaber: Siemens Aktiengesellschaft, 80333 München (DE)
(72) Erfinder: Hahn, Alexander, 91341 Röttenbach (DE); Meinert, Michael, 91056 Erlangen (DE); Rechenberg, Karsten, 91077 Dormitz (DE); Schricker, Barbara, 91058 Erlangen (DE)

(56) Entgegenhaltungen:
- DE-A1- 19 918 090
- DE-A1-102007 046 578
- DE-A1-102008 025 422
- US-A- 5 277 997

## Beschreibung

Die Erfindung betrifft eine Vorrichtung zur Energiespeicherung für ein elektrisches Triebfahrzeug, insbesondere ein Schienen- oder ein Straßenfahrzeug, nach dem Oberbegriff des Patentanspruches 1.

Derartige Energiespeichervorrichtungen können der vollständigen oder streckenweisen Traktionsversorgung elektrischer Triebfahrzeuge dienen, aber auch zur Aufnahme rückgewonnener Bremsenergie derartiger Fahrzeuge. Unter elektrischen Triebfahrzeugen sollen hier vollelektrische, dieselelektrische oder hybridangetriebene Triebfahrzeuge verstanden werden. Ein Speichermodul einer solchen Energiespeichervorrichtung umfasst ein hermetisch abgeschlossenes Modulgehäuse, welches beispielsweise auf dem Dach eines Schienenfahrzeugs angeordnet sein kann. Je nach bereitzustellender Spannung bzw. Leistung sind in dem Modulgehäuse mehrere elektrochemische Speicherzellen angeordnet und durch elektrische Verbindungselemente in Reihe oder parallel verschaltet. Die Speicherzellen können durch Elektrolyt-Kondensatoren, Doppelschicht-Kondensatoren, Lithium-Ionen-Akkumulatoren oder Hybrid-Kondensatoren gebildet sein, die ein Zellengehäuse aufweisen, in welchen zur elektrochemischen Reaktion ein Elektrolyt enthalten ist. Häufig handelt es sich dabei um einen organischen, brennbaren Elektrolyt, der in einem Fehlerfall - etwa bei thermischer oder elektrischer Überlastung oder bei unfallbedingter mechanischer Gewalteinwirkung - aus einem geöffneten Zellengehäuse austreten, verdunsten und unter ungünstigen Bedingungen zu einem Brand, einer Explosion oder einer Verpuffung führen kann.

Zur Erhöhung der Eigensicherheit von Speichermodulen mit Elektrolyt enthaltenden Speicherzellen sind aus der Offenlegungsschrift DE 10 2005 041 604 Al Schutzeinrichtungen bekannt, die physikalische und/oder chemische Größen, wie etwa Überdruck, Temperatur, chemische Reaktion, Überspannung oder dergleichen, als weisende Größe nutzt, um die Speicherzelle aus einem gefährlichen Zustand durch eine selbstsichere Schutzabschaltung in einen sicheren Zustand zu überführen.

Die Offenlegungsschrift DE 10 2007 046 578 A1 offenbart ein Speichermodul mit Elektrolyt beinhaltenden Kondensator-Speicherzellen, wobei im Modulgehäuse ein als Schüttung vorliegendes Füllmittel vorhanden ist, welches einen im Schadensfall austretenden Elektrolyten bindet. Die Befüllung der Zwischenräume zwischen den Speicherzellen mit Füllmittel birgt einerseits den Nachteil, dass man solche Speichermodule bei der Demontage etwa für Servicezwecke mit relativ hohem Aufwand reinigen und dabei das Füllmittel vollständig entfernen muss. Andererseits können als Füllmittel nur Materialien eingesetzt werden, die nicht elektrisch leitend sind, um Kurzschlüsse zwischen den Speicherzellen oder den Verbindungselementen zu vermeiden. Schließlich dürfen nur vergleichsweise weiche Füllmittel eingesetzt werden, die bei Vibrationsbewegungen keine mechanischen Beschädigungen an den Speicherzellen oder sonstigen damit in Kontakt stehenden Bauteilen hervorrufen.

Die Offenlegungsschrift DE 10 2008 025 422 A1 offenbart eine Energiespeicherzelle mit einer Sicherheitsberstmembran, insbesondere zum Einsatz in einem Energiespeicher eines Hybrid-und/oder Elektrofahrzeugs. Angrenzend an die SicherheitsBerstmembran ist ein Absorber befestigt.

In dem US-Patent 5,277,997 ist eine Anordnung zum Aufsaugen von alkalihaltigen Elektrolyten beschrieben. Die Anordnung umfasst ein poröses Material sowie ein Absorbermaterial. Die Anordnung lässt sich auf der Basis einer Windel fertigen. Der Erfindung liegt daher die Aufgabe zugrunde, eine Energiespeichervorrichtung der eingangs genannten Art bereitzustellen, dessen Füllmittel einfacher zu handhaben und funktionsgerechter ausgestaltet sind.

Die Aufgabe wird erfindungsgemäß gelöst durch eine gattungsgemäße Energiespeichervorrichtung, welche die im kennzeichnenden Teil des Patentanspruches 1 angegebenen Merkmale aufweist. Demnach sind die Füllmittel als wenigstens eine mehrkomponentige Füllpackung ausgebildet, die eine Packungshülle zum gerichteten Transport von Elektrolyt und einen von der Packungshülle umgebenen Packungskern zum Speichern von Elek-trolyt umfasst. Anstelle eines offenen Schüttguts sieht die Erfindung vor, die Füllmittel als eine aus mehreren Funk-tionskomponenten bestehende Packungseinheit auszubilden. Jede Komponente erfüllt dabei durch entsprechende Ausgestaltung eine spezifische Funktion. So dient die Packungshülle dazu, von einer Speicherzelle austretende Elektrolytflüssigkeit aufzusaugen und zunächst rasch in der Packungshülle zu verteilen, um dann über eine große Oberfläche von der Packungshülle in den Packungskern transportiert zu werden. Der Packungskern erfüllt dann die Funktion, den von der Packungshülle abgegebenen Elektrolyten aufzusaugen und zu speichern, wodurch die Packungshülle getrocknet wird. Der Packungskern weist damit ein höheres Aufnahmevolumen für Elektrolyt auf als die Packungshülle. Durch den erzielten Brandschutz wird die Eigensicherheit erfindungsgemäßer Speichermodule erhöht. Außerdem sind die eine oder mehreren Füllpackungen für Servicezwecke einfach und sauber zu entnehmen.

Bei der erfindungsgemäßen Vorrichtung weist die Packungshülle ein offenporiges oder faseriges Material auf, dessen kapillare Saugfähigkeit größer ist als die des Packungskerns. Die höhere Saugfähigkeit der Packungshülle sorgt für einen schnellen Abtransport des Elektrolyten von den Oberflächen der Zellengehäuse und für ein schnelles Verteilen über eine große Kontaktfläche zum Packungskern. Eine zielgerichtete Verteilung längs der flächig ausgebildeten Packungshülle kann durch die Orientierung des Porensystems bzw. durch eine Ausrichtung der Fasern des Materials der Packungshülle erzielt werden. Ein Material mit langen Fasern erhöht beispielsweise die Kapillarität und damit dessen Saugvermögen. Der schnell aufgesogene und im Packungskern gespeicherte Elektrolyt wird dadurch nur sehr langsam oder gar nicht mehr an die Umgebung abgegeben, wodurch eine Entzündung des ausgetretenen Elektrolyten vermieden bzw. stark gehemmt wird.

In einer bevorzugten Ausgestaltung der erfindungsgemäßen Vorrichtung weist die Packungshülle eine Filz- oder Gewebelage mit kapillarwirksamen Hohlräumen auf, deren Durchmesser weniger als 100 µm, vorzugsweise weniges als 10 µm, beträgt. Aus der Filz- oder Gewebelage kann eine geschlossene Tasche für den Packungskern gefertigt werden, deren kapillarwirksame Hohlräume durch die Porengröße oder Maschenweite der Materiallage gegeben ist. Je nach zu erzielende Wirkung können Glasfasern und/oder Aramidfasern und/oder Metallfasern und/ oder Kohlenstofffasern und/oder schwer entflammbare Kunststofffasern zum Einsatz kommen.

So ist in einer vorteilhaften Ausgestaltung der erfindungsgemäßen Vorrichtung die Packungshülle nicht brennbar ausgebildet. Durch geeignete Materialwahl kann hierdurch die Brandlast einer erfindungsgemäßen Vorrichtung erheblich erniedrigt werden.

In einer weiteren bevorzugten Ausgestaltung der erfindungsgemäßen Vorrichtung ist die Packungshülle elastisch ausgebildet. Eine elastische Ausbildung der Packungshülle schützt sowohl die Speicherzellen als auch elektrische Schaltungen, die im Modulgehäuse integriert sind, bei fahrzeugbedingten Vibrationen vor mechanischen Beschädigungen. Mit Vorteil können in einer elastisch ausgebildeten Packungshülle auch abrasive mineralische Materialien, wie Calcium-Silikat-Hydrate, als Packungskern verwendet werden.

Mit Vorteil ist die Packungshülle der erfindungsgemäßen Vorrichtung elektrisch isolierend ausgebildet. Durch entsprechende Materialwahl können damit auch Packungskerne aus elektrisch leitfähigem Material bestehen und die Packungshülle als elektrische Isolierung zwischen Speicherzellen, Verbindungselementen, eingebauten Schaltungen und Packungskern fungieren.

In einer vorteilhaften Ausgestaltung der erfindungsgemäßen Vorrichtung ist der Packungskern als Schüttgut offenporiger Materialkörner mit einer hohen aktiven Oberfläche ausgebildet. Als Maß hierfür wird die sogenannte BET-Fläche nach Brunauer, Emmett und Teller herangezogen, die bei Silikaten oder Silikatgemischen, wie beispielsweise Calcium-Silikat-Hydrate oder Alumo-Silikate, vorzugsweise größer als 20 m²/g, weiter vorzugsweise größer als 100 m²/g, gewählt wird. Bei Aktivkohle als Schüttgut können Oberflächenwerte von zwischen 500 und 2000 m²/g erreicht werden.

Vorzugsweise ist die Packungshülle einer erfindungsgemäßen Vorrichtung bezüglich des Schüttguts des Packungskerns dicht ausgebildet. Materialkörner, die auch elektrisch leitend sind, können dann bei entsprechender Feinporigkeit der Packungshülle innerhalb der vorgegebenen Lebensdauer nicht nach außen dringen und dort zu Kurzschlüssen führen.

In einer bevorzugten Ausführungsform der erfindungsgemäßen Vorrichtung weist die Packungshülle und/oder der Packungskern eine Beschichtung auf. So können beispielsweise freie Oberflächen mit einer katalytischen Beschichtung aus Platin oder Rhodium versehen sein, durch die aufgrund des Elektrolytaustritts entstehende Gase langsam und unter kontrolliertem Temperaturverhalten abreagieren. Damit wird einer schleichenden Druckentwicklung entgegengewirkt, die zum Aufplatzen des Modulgehäuses führen könnte.

In einer anderen vorteilhaften Ausführungsform der erfindungsgemäßen Vorrichtung sind die Füllpackungen formbeständig an auszufüllende Zwischenräume im Modulgehäuse angepasst ausgebildet. Formbeständige Füllpackungen ermöglichen eine einfache Bestückung des Modulgehäuses bzw. Entnahme daraus und erhöhen die innere Stabilität der Zellenpackung.

Weitere Eigenschaften und Vorteile der Erfindung ergeben sich aus einem konkreten Ausführungsbeispiel, welches nachfolgend anhand der Zeichnungen näher beschrieben wird, in deren
- FIG 1: ein Ausschnitt eines erfindungsgemäßen Speichermoduls,
- FIG 2: ein Längsschnitt durch eine Füllpackung

### schematisch veranschaulicht sind.

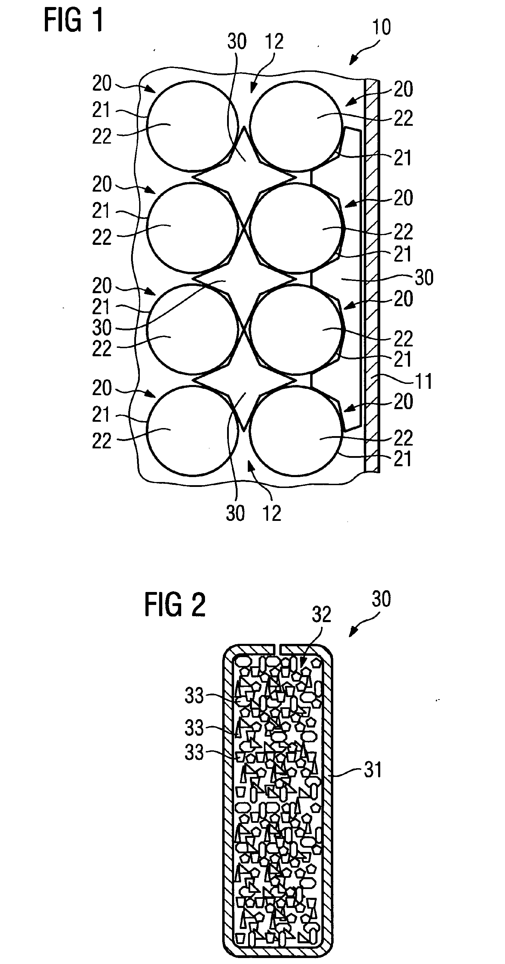

Gemäß FIG 1 weist ein Speichermodul 10 einer erfindungsgemäßen Energiespeichervorrichtung ein beispielsweise kastenförmiges Modulgehäuse 11 auf, welches beispielsweise auf einem Dach eines elektrischen Triebfahrzeugs angeordnet sein kann. In dem Modulgehäuse 11 sind mehrere elektrochemische Speicherzellen 20 aufrecht stehend nebeneinander angeordnet. Die Speicherzellen 20 weisen ein zylindrisches Zellengehäuse 21 auf, welches - ohne auf den an sich bekannten inneren Aufbau einzugehen - einen brennbaren organischen Elektrolyten 22 enthält. Die Speicherzellen 20 können beispielsweise als elektrische Doppelschicht -Kondensatoren ausgebildet sein. Alternativ können sie auch als Hybrid-Kondensatoren ausgeführt sein. Nicht dargestellt sind Verbindungselemente, die an Anschlusspolen der Speicherzellen 20 befestigt sind und diese elektrisch miteinander verbinden. Durch entsprechende Serien- und/oder Parallelschaltung der Speicherzellen 20 können die gewünschten elektrischen Leistungsmerkmale des erfindungsgemäßen Speichermoduls 10 erzeugt werden.

Zur Erhöhung der Eigensicherheit erfindungsgemäßer Energiespeichervorrichtungen sind in Zwischenräume 12 des Modulgehäuses 11, die zwischen den benachbarten Speicherzellen 20 und zwischen Speicherzellen 20 und den Seitenwänden des Modulgehäuses 11 entstehen, Füllpackungen 30 eingefügt, um im Schadensfall aus einem Zellengehäuse 21 austretenden Elektrolyten aufzunehmen. Die Füllpackungen 30 können als vorgeformte aber flexible Packungseinheit jeweils im Ganzen aus dem Modulgehäuse 11 entnommen werden, was beispielsweise für Servicezwecke erforderlich sein kann. Im dargestellten Ausführungsbeispiel sind sternförmige Füllpackungen 30 in den Zwischenraum 12 zwischen je vier benachbarten Speicherzellen 20 angeordnet, während eine randseitige Füllpackung 30 auf der einen Seite eine ebene Grenzfläche und auf seiner gegenüberliegenden Seite in die Zwischenräume je zweier benachbarter Speicherzellen 22 ragende Anformungen aufweist.

Gemäß FIG 2 umfasst eine erfindungsgemäße Füllpackung 30 mehrere Funktionskomponenten: Eine Packungshülle 31 dient zum gerichteten Transport von ausgetretenem Elektrolyt, während ein von der Packungshülle 31 umgebener Packungskern 32 zum Speichern dieses Elektrolyten dient. Die Packungshülle 31 ist als Filz- oder Gewebelage mit kapillarwirksamen Hohlräumen ausgebildet, deren Durchmesser weniger als 100 µm, vorzugsweise sogar weniger als 10 µm, beträgt. Die aus Glas- oder Aramid- oder Metall- oder Kohlenstoff- oder Kunststofffasern bestehende Materiallage der Packungshülle 31 weist eine größere kapillare Saugfähigkeit auf als der Packungskern 32. Dadurch wird erreicht, dass von einer Speicherzelle 20 ausgetretener Elektrolyt schnell aufgesaugt und in der Packungshülle 31 verteilt wird, um dann langsamer vom Packungskern 32 aufgesaugt und gespeichert zu werden. Zur Verringerung der Brandlast ist die Packungshülle 31 nicht brennbar ausgebildet. Sie ist elastisch, um Speicherzellen 20 und weitere im Modulgehäuse 11 installierte Bauteile bei Vibrationen vor mechanischen Beschädigungen zu schützen. Die Packungshülle 31 ist elektrisch isolierend ausgebildet, so dass der Packungskern 32 auch eine gewisse elektrische Leitfähigkeit aufweisen kann. Der Packungskern 32 selbst ist als Schüttgut offenporiger Materialkörner 33 mit einer hohen aktiven Oberfläche ausgebildet. Die aktive innere Oberfläche beträgt bei Silikaten oder Silikatgemischen mehr als 20 m²/g, vorzugsweise mehr als 100 m²/g. Bei Aktivkohle beträgt sie sogar zwischen 500 und 2000 m²/g. Als Schüttgut kommen neben Calcium-Silikat-Hydraten auch Zeolithe, Sepiolith oder Tobermorit zum Einsatz. Während der Lebensdauer des Schüttguts werden die Materialkörner 33 nicht kleiner als die größten in der Packungshülle 31 enthaltenen Poren, damit diese dicht hält und gegebenenfalls elektrisch leitende Materialkörner 33 nicht nach außen dringen und dort zu Kurzschlüssen führen können.

## Patentansprüche

1. Vorrichtung zur Energiespeicherung für ein elektrisches Triebfahrzeug, insbesondere ein Schienen- oder ein Straßenfahrzeug, umfassend wenigstens ein Speichermodul (10) mit einem Modulgehäuse (11), in welchem mehrere elektrochemische Speicherzellen (20), die jeweils ein einen Elektrolyten (22) einschließendes Zellengehäuse (21) aufweisen, und Füllmittel zur Aufnahme von aus einem Zellengehäuse (21) austretendem Elektrolyt angeordnet sind,
**dadurch gekennzeichnet, dass**
- die Füllmittel als wenigstens eine mehrkomponentige Füllpackung (30) ausgebildet sind, die eine Packungshülle (31) zum gerichteten Transport von Elektrolyt und einen von der Packungshülle (31) umgebenen Packungskern (32) zum Speichern von Elektrolyt umfasst,
- wobei die Packungshülle (31) ein offenporiges oder faseriges Material aufweist, dessen kapillare Saugfähigkeit größer ist als die des Packungskerns (32).

2. Vorrichtung nach Anspruch 1,
wobei die Packungshülle (31) eine Filz- oder Gewebelage mit kapillarwirksamen Hohlräumen aufweist, deren Durchmesser weniger als 100 µm, vorzugsweise weniger als 10 µm, beträgt.

3. Vorrichtung nach einem der Ansprüche 1 bis 2,
wobei die Packungshülle (31) nichtbrennbar ausgebildet ist.

4. Vorrichtung nach einem der Ansprüche 1 bis 3,
wobei die Packungshülle (31) elastisch ausgebildet ist.

5. Vorrichtung nach einem der Ansprüche 1 bis 4,
wobei die Packungshülle (31) elektrisch isolierend ausgebildet ist.

6. Vorrichtung nach einem der Ansprüche 1 bis 5,
wobei der Packungskern (32) als Schüttgut offenporiger Materialkörner (33) mit einer hohen aktiven Oberfläche ausgebildet ist.

7. Vorrichtung nach Anspruch 6,
wobei die Packungshülle (31) bezüglich der Schüttgutkörner (33) dicht ausgebildet ist.

8. Vorrichtung nach einem der Ansprüche 1 bis 7,
wobei die Packungshülle (31) und/oder der Packungskern (32) eine Beschichtung aufweist.

9. Vorrichtung nach einem der Ansprüche 1 bis 8,
wobei die Füllpackungen (30) formbeständig an auszufüllende Zwischenräume (12) im Modulgehäuse (11) angepasst ausgebildet sind.

## Claims

1. Apparatus for energy storage for an electric prime mover, in particular a rail vehicle or a road vehicle, comprising at least one storage module (10) having a module housing (11) in which a plurality of electrochemical storage cells (20), which each have a cell housing (21) that encloses an electrolyte (22), and a filling means for holding electrolyte which emerges from a cell housing (21) are arranged,
**characterized in that**
the filling means are in the form of
- at-least one multi-component filling packing (30), which comprises a packing casing (31) for directed transport of electrolyte, and a packing core (32), which is surrounded by the packing casing (31), for storage of electrolyte, wherein the packing casing (31) has an open-pore or fibrous material whose capillary suction capability is greater than that of the packing core (32).

2. Apparatus according to Claim 1,
wherein the packing casing (31) has a felt or fabric layer with cavities which act as capillaries and whose diameter is less than 100 µm, preferably less than 10 µm.

3. Apparatus according to one of Claims 1 to 2,
wherein the packing casing (31) is designed to be non-combustible.

4. Apparatus according to one of Claims 1 to 3,
wherein the packing casing (31) is designed to be elastic.

5. Apparatus according to one of Claims 1 to 4,
wherein the packing casing (31) is designed to be electrically insulating.

6. Apparatus according to one of Claims 1 to 5,
wherein the packing core (32) is designed as bulk material with open-pore material grains (33) with a large active surface area.

7. Apparatus according to Claim 6,
wherein the packing casing (31) is designed to seal the bulk material grains (33).

8. Apparatus according to one of Claims 1 to 7,
wherein the packing casing (31) and/or the packing core (32) have/has a coating.

9. Apparatus according to one of Claims 1 to 8,
wherein the filling packings (30) are designed to be matched in a dimensionally stable form to intermediate spaces (12) to be filled in the module housing (11).

## Revendications

1. Dispositif d'accumulation d'énergie pour un véhicule électrique de traction, notamment pour un véhicule sur rail ou pour un véhicule routier, comprenant au moins un module ( 10 ) d'accumulateur ayant un boîtier ( 11 ) de module, dans lequel sont disposées plusieurs piles ( 20 ) électrochimiques d'accumulateur, qui ont respectivement un boîtier ( 21 ) de pile enfermant un électrolyte ( 22 ) et des matières de remplissage pour l'absorption de l'électrolyte sortant d'un boîtier ( 21 ) de pile,
**caractérisé en ce que**
- les matières de remplissage sont constituées sous la forme d'au moins un entassement ( 30 ) de matières de remplissage à plusieurs constituants, qui comprend une enveloppe ( 31 ) de l'entassement pour le transport dirigé de l'électrolyte et un noyau ( 32 ) de l'entassement entouré de l'enveloppe ( 31 ) de l'entassement et destiné à l'accumulation de l'électrolyte, dans lequel l'enveloppe ( 31 ) de l'entassement comporte du matériau à pores ouverts ou fibreux, dont la capacité d'aspiration, par effet de capillarité, est plus grande que celle du noyau ( 31 ) de l'entassement.

2. Dispositif suivant la revendication 1,
dans lequel l'enveloppe ( 31 ) de l'entassement a une couche de feutre ou de tissu ayant des cavités à effet capillaire dont le diamètre est plus petit que 100 µm, en étant de préférence plus petit que 10 µm.

3. Dispositif suivant l'une des revendications 1 à 2,
dans lequel l'enveloppe ( 31 ) de l'entassement, qui n'est pas combustible.

4. Dispositif suivant l'une des revendications 1 à 3,
dans lequel l'enveloppe ( 31 ) de l'entassement est élastique.

5. Dispositif suivant l'une des revendications 1 à 4,
dans lequel l'enveloppe ( 31 ) de l'entassement est isolante du point de vue électrique.

6. Dispositif suivant l'une des revendications 1 à 5,
dans lequel le noyau ( 32 ) de l'entassement est constitué sous la forme d'un produit en vrac de grains ( 33 ) de matière à pores ouverts ayant une grande surface active.

7. Dispositif suivant la revendication 6,
dans lequel l'enveloppe ( 31 ) de l'entassement est étanche par rapport aux grains ( 33 ) du produit en vrac.

8. Dispositif suivant l'une des revendications 1 à 7,
dans lequel l'enveloppe ( 31 ) de l'entassement et/ou le noyau ( 32 ) de l'entassement ont un revêtement.

9. Dispositif suivant l'une des revendications 1 à 8,
dans lequel les entassements ( 30 ) de matières de remplissage sont adaptés, du point de vue de la forme, aux espaces ( 12 ) intermédiaires à remplir du boîtier ( 11 ) du module.
